**Europäisches Patentamt**

**European Patent Office**

**Office européen des brevets**

(11) Veröffentlichungsnummer: **0 431 508 A1**

## (12) EUROPÄISCHE PATENTANMELDUNG

(21) Anmeldenummer: 90123068.0

(22) Anmeldetag: 03.12.90

(51) Int. Cl.⁵: **C04B 41/61**

(30) Priorität: 05.12.89 DE 3940106

(43) Veröffentlichungstag der Anmeldung:
**12.06.91 Patentblatt 91/24**

(84) Benannte Vertragsstaaten:
**AT BE CH DE DK ES FR GB GR IT LI LU NL SE**

(71) Anmelder: **VEREINIGTE ALUMINIUM-WERKE AKTIENGESELLSCHAFT**
**Georg-von-Boeselager-Strasse 25**
**W-5300 Bonn 1(DE)**

(72) Erfinder: **Schindler, Stefan, Dr.**
**Virnebergstrasse 32**
**W-5342 Rheinbreitbach(DE)**
Erfinder: **Schultze, Werner, Dr.**
**Brüsseler Strasse 60a**
**W-5300 Bonn 1(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**W-5300 Bonn 1(DE)**

(54) **Verfahren zur Stabilisierung der Oberfläche eines Faserformkörpers aus oxidischen oder nichtoxidischen Keramikfasern.**

(57)
2.1 Den derzeitigen Faserblöcken, Platten und Hohlkörpern haftet der Nachteil an, daß sie bei Handhabung, Transport, Einbau und im Einsatz wie z. B. als Brennerrohr, insbesondere bei hohen Anström- und Durchströmgeschwindigkeiten, sehr starken Erosionseinwirkungen ausgesetzt sind Auch bei der Handhabung in getrocknetem Zustand neigen diese Faserformkörper dazu, Faserbestandteile in Form von Einzelfasern und auch Faserbruchstücken abzugeben, die je nach Größe lungengängig sind und ein erhebliches gesundheitliches Gefährdungspotential darstellen, bis zur krebserregenden Wirkung.

2.2 Die beschriebenen Nachteile sollen vermieden und eine problemlose Handhabung und ungefährdete Durchströmung bzw. Ausströmung gewährleistet werden. Das verfahren ist dadurch gekennzeichnet, daß auf die Oberfläche des Faserformkörpers ein Schutzfilm aus Wasserglas, Böhmit-Sol, Thioglycolatlösung, Thiolactat, Teflon, Harz, Lack und/oder Wachs, ggf. unter Zugabe von Tensiden, aufgetragen wird, der mit den Fasern eine physikalische und/oder chemische Bindung eingeht.

2.3 Bevorzugte Anwendung des Verfahrens zur Herstellung von Brennerrohren.

# VERFAHREN ZUR STABILISIERUNG DER OBERFLÄCHE EINES FASERFORMKÖRPERS AUS OXIDISCHEN ODER NICHTOXIDISCHEN KERAMIKFASERN.

Die Erfindung betrifft ein Verfahren zur Stabilisierung der Oberfläche eines Faserformkörpers aus oxidischen oder nichtoxidischen Keramikfasern.

Den derzeitigen Faserblöcken, Platten und Hohlkörpern haftet der Nachteil an, daß sie bei Handhabung, Transport, Einbau und im Einsatz wie z.B. als Brennerrohr, insbesondere bei hohen Anström-und Durchströmgeschwindigkeiten, sehr starken Erosionseinwirkungen ausgesetzt sind. Auch bei der Handhabung in getrocknetem Zustand neigen diese Faserformkörper dazu, Faserbestandteile in Form von Einzelfasern und auch Faserbruchstücken abzugeben, die je nach Größe lungengängig sind und ein erhebliches gesundheitliches Gefährdungspotential darstellen, bis zur krebserregenden Wirkung.

Aufgabe der vorliegenden Erfindung ist es, die beschriebenen Nachteile zu vermeiden und eine problemlose Handhabung und ungefährdete Durchströmung bzw. Ausströmung zu gewährleisten. Erfindungsgemäß werden dazu die Faserformkörper mit einer vorübergehenden oder auch dauerhaften Schicht bzw. Lage aus: Wasserglas, Böhmit-Sol und/oder Thioglycolatlösung und/oder Thiolactat und/ oder Teflon und/oder Harz, insbesondere Kunstharze und/oder Lacke, insbesondere Klarlacke und/oder Wachs, insbesondere Bienenwachs, ggf. mit Tensiden, insbesondere nichtionogenen Tensiden versehen.
Diese Substanzen bilden eine dünne Schutzhaut und führen ggf. durch Reaktion mit dem Fasermaterial zu einer Vernetzung an der oberfläche der Fasern, wobei diese Vernetzung bevorzugt in warmem Zustand erzeugt wird. Es werden daher die Fasern nicht getränkt, sondern es wird die Dicke des Schutzfilmes, der auf die Oberfläche des Faserformkörpers aufgetragen wird, auf 0,1 bis 0,5 mm begrenzt. Dabei wird die Dämmwirkung der Fasern beibehalten und dennoch die Erosion an der Oberfläche vermieden.

Im folgenden wird die Erfindung anhand von zwei Ausführungsbeispielen näher erläutert. Es zeigen:

Fig. 1 = Querschnitt durch einen erfindungsgemäß beschichteten Faserformkörper

Fig. 2 = Querschnitt durch ein erfindungsgemäß beschichtetes Faserrohr

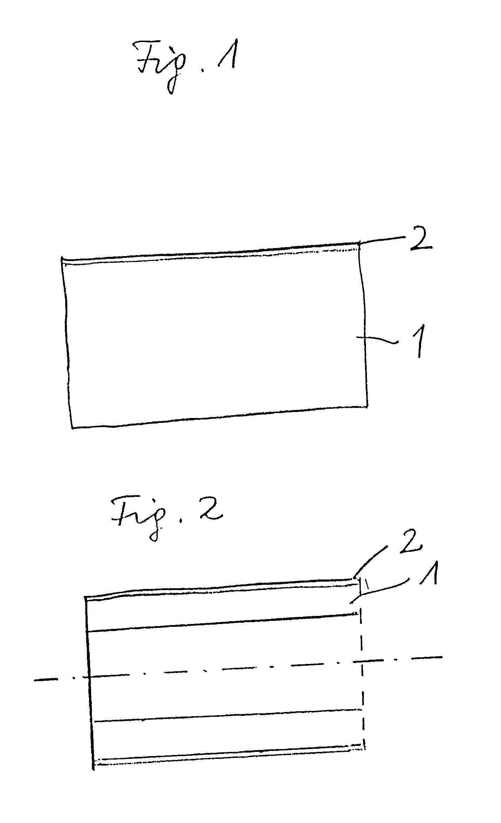

Nach Fig. 1 ist auf den Faserformkörper 1 aus einer keramischen Faser, hier z.B. Aluminiumoxid eine dünne Schutzschicht 2 aus Böhmit-Sol aufgetragen, z.B. mit einer Spritzpistole.

Der Schutzschicht wird das Lösungsmittel, hier Wasser, entzogen. Mit organischen Lösungsmittels können temporäre oder dauerhafte Schichten erzeugt werden.

Bei Beschichtungsmitteln auf Basis Wasserglas und Böhmit-Sol wurde je nach Temperatur eine Vernetzung mit den Fasern aus Aluminiumoxid und Aluminiumsilikat festgestellt. Die verwendeten Fasermaterialien werden bei den jeweiligen Vernetzungstemperaturen örtlich reaktiv, z.B. Wasserglas bei 900 - 1100 °C, Böhmit-Sol bei 1150 - 1250 °C.

Die Aushärtung bzw. Abdampfung des Lösungsmittels soll solange erfolgen, bis sich eine trockene, nicht klebrige Oberfläche des Schutzfilms ergibt. Falls Tenside in der Lösung eingemischt sind, sollen bevorzugt nicht-ionogene Tenside zur Vermeidung der Geruchsbildung verwendet werden.

Die vorgeschlagenen Maßnahmen werden experimentell an einem rohrförmigen Faserformkörper gemäß Fig. 2 aus Aluminiumoxid mit einer beidseitigen Beschichtung durchgeführt. Das Faserrohr wurde zu zwei Brennerrohren verarbeitet, wobei das erste Rohr mit der erfindungsgemäßen Schutzschicht aus Wasserglas versehen wurde. Die beiden Rohre wurden unter folgenden Bedingungen im Brennereinsatz erprobt:
Einsatz in einem Umluftofen, der bis zu Temperaturen von 1400 °C betrieben wird.

Nach Demontage der Brenner nach einer Laufzeit von einer Woche ergab sich, daß die Faseroberfläche des unbeschichteten Brennerrohres bereits deutliche Erosionserscheinungen aufwiesen, während das mit dem erfindungsgemäßen Verfahren hergestellte Brennerrohr an der Oberfläche unbeschädigt blieb.

## Ansprüche

1. Verfahren zur Stabilisierung der Oberfläche eines Faserformkörpers aus oxidischen oder nichtoxidischen Keramikfasern, der durch Vakuumansaugen aus einem Faserbrei gewonnen wurde, dadurch gekennzeichnet, daß auf die Oberfläche des Faserformkörpers ein Schutzfilm von 0,1 - 0,5 mm aufgetragen wird, der mit den Fasern eine physikalische und/oder chemische Bindung eingeht.

2. Verfahren nach Anspruch 1, dadurch gekennzeichnet, daß auf die Oberfläche des Faserkörpers (1) ein Schutzfilm aus Wasserglas, Böhmit-Sol, Thioglycolatlösung, Thiolactat, Teflon, Harz, Lack und/oder Wachs, ggf. unter Zugabe von Tensiden, aufgetragen wird.

3. Verfahren nach einem der vorhergehenden Ansprüche, dadurch gekennzeichnet, daß als Schutzfilm Kunstharze verwendet werden.

4. Verfahren nach einem der vorhergehenden Ansprüche, dadurch gekennzeichnet, daß als Schutzfilm Klarlacke verwendet werden.

5. Verfahren nach einem der vorhergehenden Ansprüche, dadurch gekennzeichnet, daß als Schutzfilm Bienenwachs verwendet wird.

6. Verfahren nach einem der vorhergehenden Ansprüche, dadurch gekennzeichnet, daß als Tensid nicht-ionogenes Tensid verwendet wird.

7. Verfahren nach einem der vorhergehenden Ansprüche, dadurch gekennzeichnet, daß der Schutzfilm aus Wasserglas bei Temperaturen zwischen 900 - 1100 $^\circ$C mit den Fasern des Faserformkörpers vernetzt wird.

8. Verfahren nach einem der vorhergehenden Ansprüche, dadurch gekennzeichnet, daß der Schutzfilm aus Böhmit-Sol bei Temperaturen zwischen 1150 - 1250 $^\circ$C mit den Oxidfasern der Faserformkörper vernetzt wird.

Fig. 1

Fig. 2

Europäisches
Patentamt

EUROPÄISCHER RECHERCHENBERICHT

Nummer der Anmeldung

EP    90 12 3068
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2747663 (GRÜNZWEIG & HARTMANN UND GLASFASER AG)<br>* Seite 3, Zeile 1 - Seite 5, Zeile 9 *<br>* Ansprüche 1-2, 5-6 ** example 1 * | 1-2, 7 | C04B41/61 |
| Y | | 3-6, 8 | |
| | --- | | |
| Y | DE-A-1057007 (E. AND W. SAUER)<br>* Spalte 2, Zeile 48 - Spalte 3, Zeile 20 *<br>* Spalte 5, Zeilen 7 - 27 *<br>* Spalte 6, Zeile 1 - Spalte 56 * | 3-6 | |
| | --- | | |
| Y | FR-A-1480832 (OWENS-CORNING FIBERGLAS CORPORATION)<br>* Spalte 1, Zeilen 1 - 30 *<br>* Spalte 2, Zeile 8 - Spalte 3, Zeile 8 *<br>* Spalte 4, Zeile 55 - Spalte 6, Zeile 40 *<br>* Spalte 7, Zeilen 1 - 6 ** example 1 *<br>* Spalte 7, Zeilen 41 - 52 * | 8 | |
| A | | 1-2, 7 | |
| | --- | | |
| A | US-A-4369203 (R. P. HANSEN)<br>* Zusammenfassung; Ansprüche 1-3, 10 *<br>* Spalte 1, Zeilen 1 - 57 *<br>* Spalte 5, Zeile 6 - Spalte 6, Zeile 22 * | 1-4, 6 | RECHERCHIERTE SACHGEBIETE (Int. Cl.5) |
| | --- | | |
| A | EP-A-302749 (SHIMIZU CONSTRUCTION CO, LTD.)<br>* Zusammenfassung; Ansprüche 1-4 *<br>* Seite 1, Zeilen 4 - 63 *<br>* Seite 5, Zeilen 40 - 22 * | 1-4 | C04B |
| | --- | | |
| A | CHEMICAL ABSTRACTS, vol. 102, no. 16, April 1985 Columbus, Ohio, USA<br>N. Nagata: "Fire-resistant building materials and fire-extinguishing materials"<br>Seite 303; ref. no. 136784R<br>&JP-A-59194757(N. Nagata)05.11.1984<br>* Zusammenfassung * | 1-4, 6 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 28 FEBRUAR 1991 | OLSSON S.A. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | CHEMICAL ABSTRACTS, vol. 107, no. 14, Oktober 1987 Columbus, Ohio, USA R. Pentti: "Coated mineral wool and its manufacture" Seite 281; ref. no. 120045T &FI-A-72538(Ilvesvilla Oy)27.02.1987 * Zusammenfassung * ----- | 1-2, 7 | |

**RECHERCHIERTE SACHGEBIETE (Int. Cl.5 )**

Der vorliegende Recherchenbericht wurde für alle Patentansprüche erstellt

| Recherchenort | Abschlußdatum der Recherche | Prüfer |
|---|---|---|
| DEN HAAG | 28 FEBRUAR 1991 | OLSSON S.A. |